Europäisches Patentamt

European Patent Office

Office européen des brevets

(11) Veröffentlichungsnummer: **0 358 973 B1**

(19)

(12) EUROPÄISCHE PATENTSCHRIFT

(45) Veröffentlichungstag der Patentschrift: **13.10.93**

(21) Anmeldenummer: **89115164.9**

(22) Anmeldetag: **17.08.89**

(51) Int. Cl.⁵: **B60D 1/30**, B62D 37/00

(54) Verfahren zur Stabilitätskontrolle von Gespannen.

(30) Priorität: **16.09.88 DE 3831492**

(43) Veröffentlichungstag der Anmeldung:
**21.03.90 Patentblatt 90/12**

(45) Bekanntmachung des Hinweises auf die
Patenterteilung:
**13.10.93 Patentblatt 93/41**

(84) Benannte Vertragsstaaten:
**DE FR GB IT NL SE**

(56) Entgegenhaltungen:

**ATZ AUTOMOBILTECHNISCHE ZEITSCHRIFT.
vol. 89, no. 11, November 1987, STUTTGART
DE Seiten 605 - 608; V. Alberti:
"Fahrverhalten von Pkw-Anhängerzügen mit
Knickwinkeldämpfern oder Viergelenkdeichsel"**

**ATZ AUTOMOBILTECHNISCHE ZEITSCHRIFT.
vol. 84, no. 11, November 1982, STUTTGART
DE Seiten 565 - 570; A. Zomotor, W. Kuhn:
"Beitrag zur Verbesserung der aktiven Sicherheit von Personenwagen-
Caravan-Zügen"**

**ISO/TC 22/SC 9 N 311 v. 8. Mai 1987**

(73) Patentinhaber: **Adam Opel Aktiengesellschaft
Bahnhofsplatz 1
Postfach 17 10
D-65407 Rüsselsheim(DE)**

(72) Erfinder: **Ohlert, Johannes, Dr.rer.nat.
Tannenstrasse 38
D-6090 Rüsselsheim(DE)**
Erfinder: **Gora, Hans Joachim, Dipl.-Ing.
Pfälzer Weg 5
D-6094 Bischofsheim(DE)**

(74) Vertreter: **Bergerin, Ralf, Dipl.-Ing. et al
Adam Opel AG,
Patentwesen
D-65423 Rüsselsheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 358 973 B1

# Beschreibung

Die Erfindung betrifft ein Verfahren zur Stabilitätskontrolle von Gespannen, bei dem die Fahrzeuggeschwindigkeit, der Lenkradwinkel und der Knickwinkel zwischen der Längsachse des Zugfahrzeugs und der Längsachse des Anhängers gemessen wird, bei dem aus den gemessenen Werten die Dämpfung der Knickwinkelschwingung für eine bestimmte Fahrzeuggeschwindigkeit ermittelt und zusammen mit der dazugehörigen Fahrzeuggeschwindigkeit gespeichert wird und bei dem aus den gespeicherten Wertepaaren Dämpfung-Fahrzeuggeschwindigkeit die kritische Fahrzeuggeschwindigkeit berechnet wird, bei der die Dämpfung der Knickwinkelschwingung Null ist.

Aus dem Entwurf für die ISO/TC 22/SC 9 N 311 vom 08.05.1987 ist ein Verfahren der eingangs genannten Art zum Testen der Querstabilität von Gespannen bekannt, bei dem aus Meßwerten für die Fahrzeuggeschwindigkeit und für den Knickwinkel zwischen der Längsachse des Zugfahrzeugs und der Längsachse des Anhängers die kritische Fahrzeuggeschwindigkeit ermittelt wird.

Dazu wird die Dämpfung der Knickwinkelschwingung für verschiedene Fahrzeuggeschwindigkeiten gemessen. Durch die so ermittelten Wertepaare Dämpfung-Fahrzeuggeschwindigkeit wird eine abfallende Regressionsgrade gelegt, so daß die Geschwindigkeit bestimmt werden kann, für die die Dämpfung der Knickwinkelschwingung gleich Null ist. Hierdurch ist die kritische Geschwindigkeit gegeben, da bei Fahrgeschwindigkeiten über dieser Geschwindigkeit ein einmal ins seitliche Schwingen gekommener Anhänger nicht mehr von selber gerade zieht.

Da die kritische Fahrzeuggeschwindigkeit von einer Vielzahl von Faktoren, wie z.B. Fahrbahnzustand, Reifenzustand (Profiltiefe, Luftdruck, usw.), Seitenwindverhältnissen und Beladung des Gespanns abhängt, die sich sowohl von Fahrt zu Fahrt als auch während der Fahrt laufend ändern können, ist es nicht möglich, dieses Verfahren, das überdies eine Vielzahl von Messungen erfordert, für Steuerungs- oder Warnzwekke zu verwenden.

Die Aufgabe der vorliegenden Erfindung ist es, ein Verfahren der eingangs genannten Art zu schaffen, das es auf einfache und zuverlässige Weise ermöglicht, den Fahrer eines Gespannes zu einem frühest möglichen Zeitpunkt vor dem Auftreten von kritischen Fahrzuständen infolge von Schwingbewegungen des Gespanns zu warnen.

Diese Aufgabe wird erfindungsgemäß dadurch gelöst, daß der Quotient von Effektivwert des Knickwinkels zu Effektivwert des Lenkradwinkels gebildet und mit einem vorbestimmten Grenzwert verglichen wird, daß die von der Fahrzeuggeschwindigkeit abhängige Dämpfung der Knickwinkelschwingung nur dann bestimmt und zusammen mit der dazugehörigen Fahrzeuggeschwindigkeit gespeichert wird, wenn der Quotient von Effektivwert des Enickwinkels zu Effektivwert des Lenkradwinkels größer oder gleich dem Grenzwert ist, und daß ein Warnsignal erzeugt wird, wenn die aktuelle Fahrzeuggeschwindigkeit größer als eine Grenzgeschwindigkeit ist.

Durch die erfindungsgemäß vorgesehene Bestimmung von Wertepaaren Dämpfung-Fahrzeuggeschwindigkeit, die nur dann vorgenommen wird, wenn der Quotient von Effektivwert des Knickwinkels zu Effektivwert des Lenkradwinkels größer oder gleich einem vorgegebenen Grenzwert ist, läßt sich stets eine aktuelle kritische Fahrzeuggeschwindigkeit ermitteln, bei deren Bestimmung neben gespannspezifischen Parametern auch äußere Parameter wie Fahrbahnzustand, Seitenwind, usw. berücksichtigt sind. Aus der so ermittelten kritischen Fahrzeuggeschwindigkeit läßt sich eine davon abhängige Grenzgeschwindigkeit festlegen, so daß der Fahrer stets rechtzeitig gewarnt werden kann, bevor kritische Fahrzeugzustände auftreten.

Aufgrund des erzeugten Warnsignals kann der Fahrer des Gespanns, bei dem das erfindungsgemäße Verfahren zum Einsatz kommt, seinen Fahrstil, insbesondere die gefahrene Fahrzeuggeschwindigkeit, an die vorliegenden Fahrbedingungen anpassen, so daß kritische Fahrzustände vermieden werden können. Hierdurch läßt sich die Fahrstabilität des Gespannes und damit dessen Fahrsicherheit zuverlässig gewährleisten.

Bei einem ersten Ausführungsbeispiel der Erfindung ist vorgesehen, daß die Effektivwerte des Knickwinkels und des Lenkradwinkels während eines Zeitintervalls berechnet werden und daß aus den Effektivwerten von Knickwinkel und Lenkradwinkel der entsprechende Quotient gebildet wird. Hierdurch wird erreicht, daß für die Bestimmung des Quotienten von Knickwinkel zu Lenkradwinkel stets im wesentlichen eine vollständige Knickwinkelschwingung, also die Knickwinkelschwingung von ihrem Beginn bis zu ihrem Ende, an dem sie abgeklungen ist, erfaßt wird, so daß statistische Schwankungen des Quotienten, wie sie bei der zufälligen momentanen Ermittlung von Knickwinkel und Lenkradwinkel auftreten könnten, weitgehend vermieden werden. Somit läßt sich der Quotient auf zuverlässige Weise feststellen.

Bei einer anderen Weiterbildung der Erfindung ist vorgesehen, daß während des Zeitintervalls die mittlere Fahrzeuggeschwindigkeit bestimmt wird und daß die für ein Zeitintervall ermittelte Dämpfung der in diesem Zeitintervall bestimmten mittleren Fahrzeuggeschwindigkeit zugeordnet wird.

Da während des normalen Fahrbetriebs die Fahrzeuggeschwindigkeit des Gespanns nicht konstant ist, sondern stets Schwankungen unterliegt, lassen sich auf diese Weise auch statistische Fehler bei der Bestimmung der Fahrzeuggeschwindigkeit vermeiden.

Bei einem praktischen Ausführungsbeispiel der Erfindung ist vorgesehen, daß die Dauer des Zeitintervalls zwischen 5 s und 20 s, vorzugsweise zwischen 8 s und 15 s und insbesondere etwa bei 10 s liegt. Hierdurch läßt es sich sicherstellen, daß, wie gefordert, stets eine vollständige Knickwinkelschwingung erfaßt wird.

Um das erfindungsgemäße Verfahren möglichst genau bei verschiedenen Gespannen einsetzen zu können, ist bei einer besonders bevorzugten Ausführungsform der Erfindung vorgesehen, daß der Grenzwert in Abhängigkeit von der Geometrie von Zugfahrzeug und Anhänger vorgegeben wird.

Eine andere Weiterbildung der Erfindung zeichnet sich dadurch aus, daß der Grenzwert gleich dem Quotienten aus einem vorgegebenen Knickwinkel für Fahrzustande des Gespanns ohne Knickwinkeloszillation zu einem vorgegebenen Lenkradwinkel ist, wobei der minimale Absolutwert des von der gegebenen Geometrie des Gespanns abhängigen Knickwinkels für Fahrzustände ohne Knickwinkeloszillation, der eine Funktion des Lenkwinkels ist, den vorgegebenen Knickwinkel zur Bestimmung des Grenzwerts bildet.

Auf diese Weise läßt sich der Grenzwert für den Quotienten von Effektivwert des Knickwinkels zu Effektivwert des Lenkradwinkels auf besonders vorteilhafte Weise sowohl in Abhängigkeit von der Geometrie des Zugfahrzeugs als auch in Abhängigkeit von der Geometrie des Anhängers bestimmen, so daß eine rechtzeitige Erzeugung des Warnsignals für den Fahrer stets sichergestellt ist.

Bei einer weiteren Ausführungsform der Erfindung ist vorgesehen, daß der vorgegebene Lenkradwinkel zur Bestimmung des Grenzwertes so gewählt wird, daß der zugehörige Lenkwinkel zwischen $10°$ und $20°$ beträgt.

Um die jeweils ermittelte aktuelle kritische Fahrzeuggeschwindigkeit möglichst genau an die gerade vorliegenden Fahrbedingungen anpassen zu können, ist bei einer weiteren Ausführungsform der Erfindung vorgesehen, daß beim Speichern eines neuen Wertepaares Dämpfung-Fahrzeuggeschwindigkeit das älteste gespeicherte Wertepaar gelöscht wird, wenn bereits eine vorgegebene Anzahl von Wertepaaren gespeichert ist.

Damit der Fahrer stets rechtzeitig vor kritischen Fahrzuständen gewarnt werden kann, und gleichzeitig genügend Zeit für entsprechende Gegenmaßnahmen hat, ist bei einem weiteren Ausführungsbeispiel der Erfindung vorgesehen, daß die Grenzgeschwindigkeit gleich der kritischen Fahrzeuggeschwindigkeit minus einer Geschwindigkeitsdifferenz ist, wobei die Geschwindigkeitsdifferenz 8 % bis 15 %, vorzugsweise 10 % der aktuellen kritischen Fahrzeuggeschwindigkeit beträgt.

Auf diese Weise wird das Warnsignal bereits zu einem Zeitpunkt erzeugt, wo es praktisch noch nicht zu kritischen Fahrzuständen kommen kann.

Um den Fahrer, insbesondere bei Beschleunigungsvorgängen, bei denen innerhalb des Zeitintervalls für die Bestimmung des Quotienten von Effektivwert des Knickwinkels zu Effektivwert des Lenkradwinkels beträchtliche Geschwindigkeitsänderungen auftreten können, rechtzeitig warnen zu können, zeichnet sich eine besonders vorteilhafte Ausführungsform der Erfindung dadurch aus, daß die aktuelle Fahrzeuggeschwindigkeit fortlaufende mit der aktuellen Grenzgeschwindigkeit verglichen wird.

Die Erfindung wird im folgenden beispielsweise anhand der Zeichnung näher beschrieben; in dieser zeigt:

Fig. 1     eine schematische Darstellung der Geometrie eines Gespanns,

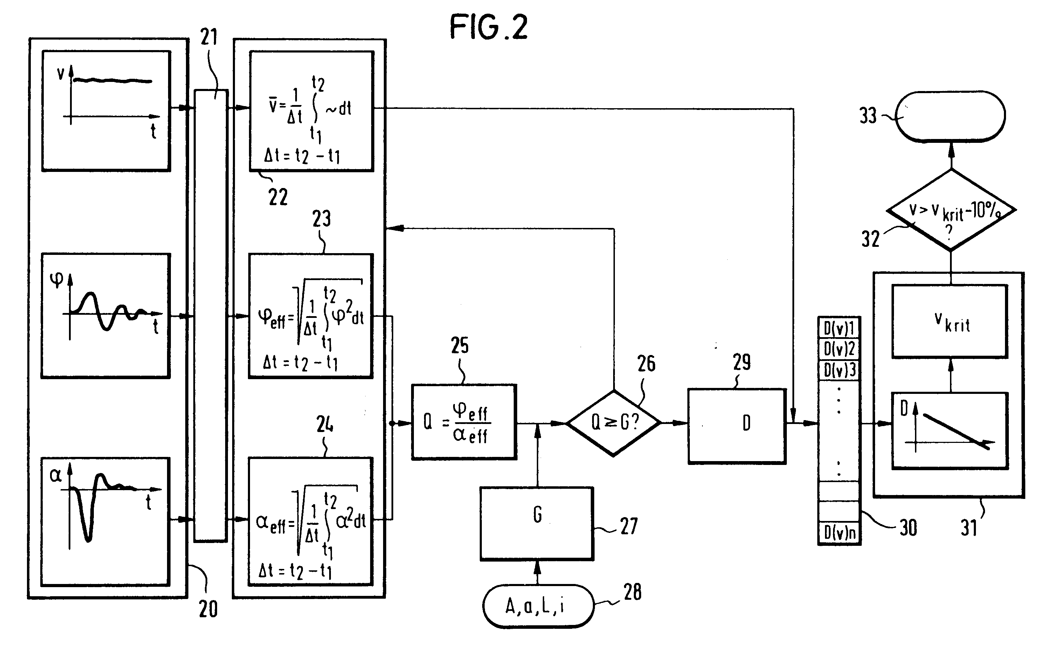

Fig. 2     ein Blockdiagramm des Verfahrens zur Stabilitätskontrolle und

Fig. 3     ein Diagramm, bei dem der Quotient Effektivwertknickwinkel zu Effektivwertlenkradwinkel über der Fahrzeuggeschwindigkeit aufgetragen ist.

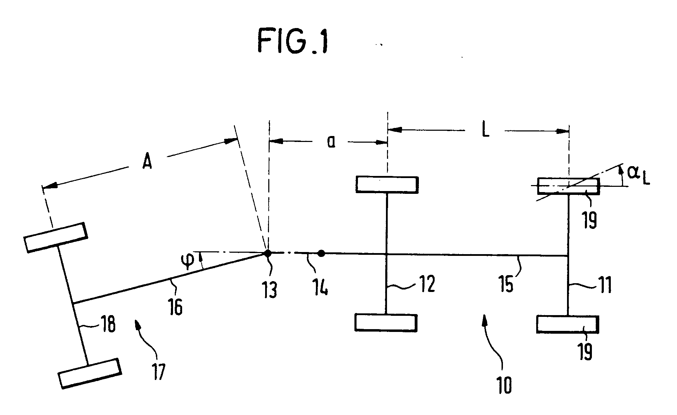

Fig. 1 zeigt rein schematisch ein Zugfahrzeug 10, z.B. einen Personenkraftwagen, mit einer Vorderradachse 11 und einer Hinterradachse 12, dessen Radstand L durch den Abstand der Achsen 11 und 12 gegeben ist. Im Abstand a von der Hinterradachse 12 ist am Zugfahrzeug 10 der Kugelkopf 13 einer schematisch angedeuteten Anhängerzugvorrichtung 14 angeordnet, der sich auf der Längsachse 15 des Zugfahrzeugs 10 befindet.

Der Kugelkopf 13 bildet gleichzeitig den Kugelpunkt einer Anhängerdeichsel 16 eines mit dem Zugfahrzeug 10 verbundenen Anhänger 17, dessen einzige Achse 18 einen Abstand A vom Kugelpunkt der Anhängerdeichsel 16 bzw. vom Kugelkopf 13 der Anhängerzugvorrichtung 14 aufweist.

Zwischen der Längsachse des Anhängers, die der schematisch dargestellten Anhängerdeichsel 16 entspricht und der Längsachse 15 ist ein Knickwinkel $\phi$ gebildet.

Bei einem Lenkvorgang werden die Vorderräder 19 des Zugfahrzeugs 10 gegenüber ihrer Geradeausstellung verdreht, so daß sie mit ihrer Geradeausstellung einen Lenkwinkel $\alpha_L$ einschließen.

Wird im normalen Fahrbetrieb des Gespannes eine Lenkbewegung durchgeführt, z.B. zum Spurwechsel, so stellt sich zunächst ein Knickwinkel zwischen der Längsachse 15 des Zugfahrzeugs 10 und der Anhängerdeichsel 16 ein, der dann nach Beendigung des Lenkvorgangs wieder zu Null wird, so daß die Anhängerdeichsel 16 wiederum mit der Längsachse des Zugfahrzeugs 15 fluchtend ausgerichtet ist. Hierbei kann es nun zu Knickwinkelschwingungen kommen, so daß der Anhänger 17 nicht unmittelbar nach Beendigung des Lenkvorgangs wieder geradezieht, sondern zunächst überschwingt, und erst nach Abklingen der Knickwinkelschwingung wieder ruhig hinter dem Zugfahrzeug 10 herläuft.

Um die Knickwinkelschwingung sowie deren logarithmisches Dekrement und damit den Dämpfungsfaktor der Knickwinkelschwingung erfassen zu können, wird mittels geeigneter Sensoren die Gespann- bzw. Fahrzeuggeschwindigkeit v an der Tachowelle des Zugfahrzeugs, der Knickwinkel $\phi$ am Kugelkopf 13 der Anhängerzugvorrichtung 14 und der Lenkradwinkel $\alpha$ an der Lenkspindel bzw. am Lenkgetriebeeingang erfaßt. Die von den Sensoren erfaßten Signale werden über eine Eingangsstufe 20 einzeln einer Signalverarbeitungsschaltung 21 zugeführt, die einem Mikroprozessor vorgeschaltet oder in diesen integriert sein kann. In der Signalverarbeitungsschaltung 21 werden die Meßsignale der Sensoren gefiltert, analog-digital gewandelt und einer Sampel-and-Hold-Stufe zugeführt.

Die von den einzelnen Sampel-and-Hold-Gliedern der Sampel-and-Hold-Stufe gelieferten Ausgangssignale der Signalverarbeitungsschaltung 21 werden an Integrationsschaltungen 22, 23, 24 angelegt.

Dabei wird in der ersten Integrationsschaltung 22 für das Geschwindigkeitssignal zunächst das Zeitintegral über ein Zeitintervall $\Delta t = t_2-t_1 = 10\,s$ gebildet, um anschließend die mittlere Fahrzeuggeschwindigkeit v während des Zeitintervalls $\Delta t$ zu berechnen.

Entsprechend wird in der zweiten und dritten Integrationsschaltung 23 bzw. 24 das Zeitintegral über das Quadrat des Knickwinkels $\phi$ bzw. über das Quadrat des Lenkradwinkels $\alpha$ gebildet, aus dem anschließend der Effektivwert $\phi_{eff}$ für den Knickwinkel $\phi$ bzw. der Effektivwert $\alpha_{eff}$ für den Lenkradwinkel $\alpha$ während des Zeitintervalls $\Delta t$ be-rechnet wird.

Die Ausgangssignale werden dann an eine Dividierschaltung 25 angelegt, in der der Quotient Q aus den Effektivwerten $\phi_{eff}$, $\alpha_{eff}$ von Knickwinkel $\phi$ und Lenkradwinkel $\alpha$ berechnet wird. Der von der Dividierschaltung 25 berechnete Quotient Q wird an eine Komparatorschaltung 26 angelegt, der gleichzeitig von einer Grenzwertschaltung 27 ein Grenzwert G zugeführt wird, mit dem der Quotient Q zu vergleichen ist.

Der Grenzwert G, der durch die Geometrie von Zugfahrzeug und Anhänger festgelegt ist, wird aus dem Verhältnis von Knickwinkel $\phi$ zu Lenkradwin-kel $\alpha$ für solche Bewgungszustände des Gespannes bestimmt, die nicht durch Knickwinkelschwingungen gekennzeichnet sind. Der Knickwinkel $\phi$ ist für derartige Bewegungszustände nur durch den

Lenkradwinkel $\alpha$ bzw. den Lenkwinkel $\alpha_L$ und die Geometrie des Gespannes gegeben. Dabei ergibt sich der Knickwinkel durch die Gleichung.

$$\tan\varphi = \frac{\varrho_H a \pm A\sqrt{a^2+(\varrho_H)^2-A^2}}{(\varrho_H)^2-A^2}$$

Hierbei ist

$$\varrho_H = \frac{L}{\tan\left(\dfrac{\alpha_L}{i}\right)}$$

Dabei ist L der in Fig. 1 dargestellte Radstand L des Zugfahrzeugs, a der Abstand Hinterradachse 12 zum Kugelkopf 13 der Anhängerzugvorrichtung 14, A die Länge der Anhängerdeichsel von ihrem Kugelpunkt bis zur Achsmitte des Anhängers 17 und i die Übersetzung des Lenkgetriebes.

Für die Berechnung des Grenzwertes G werden der Grenzwertschaltung 27 von einem Datenspeicher oder einer Dateneingabeschaltung 28 die entsprechenden Werte zur Ermittlung des Grenzwertes G zugeführt.

Dazu können in der Dateneingabeschaltung 28 die dem Mikroprozessor zur Durchführung des Verfahrens zugeordnet oder in diesen integriert ist, die zugfahrzeugspezifischen Parameter a, L und i so-wie ein ausgewählter Lenkwinkel $\alpha_L$ aus dem Inter-vall von 10° bis 20° hardwaremäßig vorgegeben oder implementiert sein. Der anhängerspezifische Parameter A kann jeweils manuell vom Fahrer des Zugfahrzeugs 10 in die Dateneingabeschaltung 28 eingegeben werden, um diesen Wert an den jeweiligen an das Zugfahrzeug 10 angehängten Anhänger 17 anpassen zu können.

Zur Berechnung des Grenzwertes G wird mittels der oben angegebenen Gleichung für den Knickwinkel $\phi$ der minimale Absolutwert $\phi_{min}$ des Knickwinkels $\phi$ berechnet und anschließend durch den Lenkwinkel $\alpha_L$ aus dem Intervall von 10° bis 20° dividiert. Der Grenzwert G ist damit also durch $\phi_{min} / \alpha_L$ gegeben.

Die Komparatorschaltung 26, die den Quotienten Q mit dem Grenzwert G vergleicht, gibt ein Steuersignal an eine Dämpfungsberechnungsschaltung 29 ab, für den Fall, daß der Quotient Q größer oder gleich dem Grenzwert G ist, so daß daraufhin die Dämpfung D der aufgetretenen Knickwinkelschwingung berechnet wird. Anderenfalls wird ein Steuersignal an die aus den Integrationsschaltungen 22, 23, 24 gebildete Integrationsstufe angelegt, um erneut die mittlere Fahrzeuggeschwindigkeit v sowie die Effektivwerte $\phi_{eff}$, $\alpha_{eff}$ für den Knickwinkel $\phi$ und den Lenkradwinkel $\alpha$ zu ermitteln.

Das Ausgangssignal der Dämpfungsberechnungsschaltung 29 wird an ein Schiebe- oder Stackregister 30 angelegt, dem auch das die mitt-lere Fahrzeuggeschwindigkeit v darstellende Aus-gangssignal der ersten Integrationsschaltung 22 zugeführt ist. Die Dämpfung D wird zusammen mit der dazugehörigen mittleren Fahrzeuggeschwindigkeit v in dem Stackregister 30 gespeichert. Dabei wird jeweils das älteste Wertepaar Dämpfung-Mittlere Fahrzeuggeschwindigkeit gelöscht, sobald das Stackregister 30 gefüllt ist und ein weiteres Wertepaar eingeschrieben wird.

Die Datenpaare des Stackregisters 30 werden einer Auswerteschaltung 31 zugeführt, die durch die Wertepaare eine Regressionsgrade legt, um die kritische Fahrzeuggeschwindigkeit $v_{krit}$ zu ermitteln. Das Ausgangssignal der Auswerteschaltung 31, das jeweils die aktuelle kritische Fahrzeuggeschwindig-keit $v_{krit}$ darstellt, wird an eine weitere Komparatorschaltung angelegt, der in nicht dargestellter Weise die aktuelle Fahrzeuggeschwindigkeit v zugeführt ist, und die die aktuelle Fahrzeuggeschwindigkeit v mit einer Grenzgeschwindigkeit $v_e$ vergleicht, die gleich der aktuellen kritischen Fahrzeuggeschwin-digkeit $v_{krit}$ minus 1/10 dieser kritischen Fahrzeuggeschwindigkeit ist.

Sobald die aktuelle Fahrzeuggeschwindigkeit v größer wird als die Grenzgeschwindigkeit vg = $v_{krit}$ - 0,1$v_{krit}$ gibt die Komparatorschaltung 32 ein Ausgangssignal an eine Anzeigeschaltung 33, die daraufhin ein geeignetes Warnsignal für den Fahrer erzeugt, das diesen auf seinen kritischen Fahrzeugzustand aufmerksam macht, so daß er daraufhin seine Fahrweise ändern kann.

Um eine möglichst frühzeitige Erzeugung des Warnsignals durch die Anzeigeschaltung 33 sicherzustellen, wird der Komparatorschaltung 32 fortlaufend die aktuelle Fahrzeuggeschwindigkeit v des Gespanns bzw. des Zugfahrzeugs 10 zugeführt, so daß eine fortlaufende Stabilitätskontrolle gewährleistet ist.

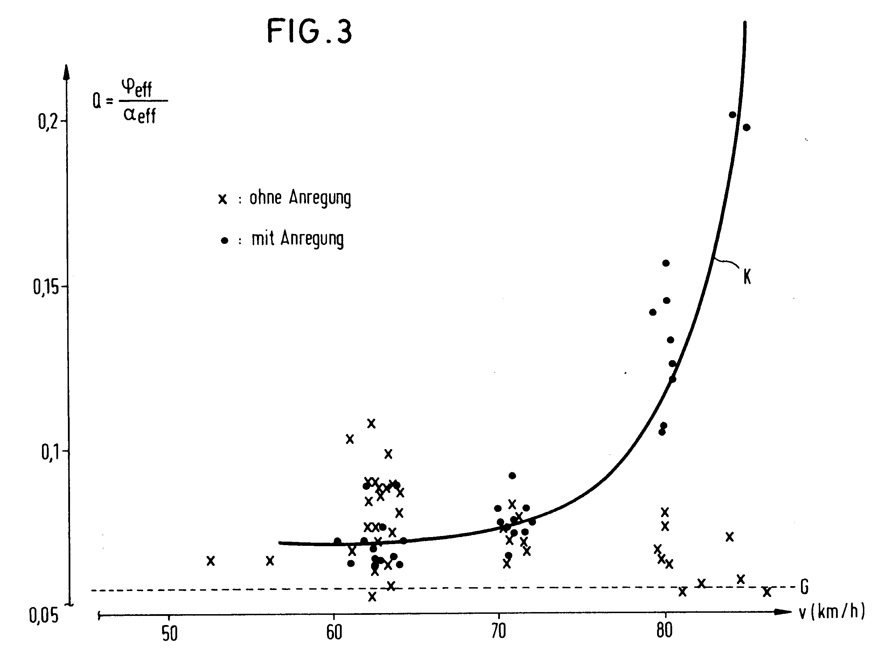

In Fig. 3 ist schließlich der Quotient vom Effek-tivwert $\phi_{eff}$ des Knickwinkels $\phi$ zum Effektivwert $\alpha_{eff}$ des Lenkradwinkels $\alpha$ aufgetragen, wobei die Kreu-ze im Diagramm die Werte für den Quotienten darstellen, die bei Fahrzuständen ohne Knickwinkelschwingung ermittelt wurden. Der theoretisch berechnete Grenzwert G ist als gestrichelte Gerade in dieses Diagramm eingetragen, wobei sich zeigt, daß dieser Wert mit den kleinsten ermittelten Werten für den Quotienten Q bei fehlender Anregung zu Knickwinkelschwingungen im wesentlichen zusammenfällt.

Für Fahrzustände bei denen infolge von Anregung Knickwinkelschwingungen auftreten, ergeben sich Quotienten Q = $\phi_{eff}$ / $\alpha_{eff}$, die mit wachsender Geschwindigkeit v ebenfalls stark zunehmen, wie die durchgezogene Kurve K zeigt.

Das Verfahren arbeitet nun unter Verwendung der beschriebenen Anordnung wie folgt:
Zunächst werden phasengleich die Meßsignale für die Fahrzeuggeschwindigkeit vi den Knickwinkel $\phi$ und den Lenkradwinkel ermittelt und meßtechnisch aufbereitet. Anschließend wird der Mittelwert der Fahrzeuggeschwindigkeit v sowie die Effektivwerte $\phi_{eff}$, $\alpha_{eff}$ für den Knickwinkel $\phi$ und den Lenradwin-kel $\alpha$ im Zeitintervall $\Delta t$ berechnet.

Die Länge des Zeitintervalls $\Delta t$ richtet sich dabei nach der Speicherkapazität des für das Ver-fahren verwendeten Mikroprozessors. Das Zeitinte-vall $\Delta t$ sollte jedoch nicht wesentlich kürzer als 10 s sein, damit die auftretenden Knickwinkelschwingungen möglichst vollständig erfaßt werden können.

Nach Ablauf eines Zeitintervalls $\Delta t$ wird der Quotient Q aus den Effektivwerten $\phi_{eff}$ und $\alpha_{eff}$ des Knickwinkels $\phi$ bzw. des Lenkradwinkels $\alpha$ berech-net und mit dem gespannspezifischen Grenzwert G verglichen. Überschreitet der Quotient Q den Grenzwert G so wird mit Hilfe der vorhandenen Meßsignale die Dämpfung D für Knickwinkelschwingungen des Gespanns bei der aktuellen Fahrzeuggeschwindigkeit v bestimmt. Die Ermittlung der Dämpfung erfolgt dabei in bekannter Weise, wie in der Norm ISO/TC 22/SC 9 N 311 beschrieben. Die berechnete Dämpfung wird daraufhin zusammen mit der zugehörigen mittleren Fahrzeuggeschwindigkeit v im Stackregister 30 gespeichert, um somit die für die Bestimmung der kritischen Fahrzeuggeschwindigkeit erforderlichen Wertepaare zu aktualisieren.

Ist umgekehrt der Quotient Q kleiner als der Grenzwert G wird für das nächste Zeitintervall $\Delta t$ der Quotient Q aus den in diesem Zeitintervall $\Delta t$ erfaßten Meßwerten erneut berechnet.

Aus den im Stackregister 30 gespeicherten, ggfs. aktualisierten Wertepaaren Dämpfung-Fahr-zeuggeschwindigkeit wird die kritische Fahrzeugge-schwindigkeit $v_{krit}$ berechnet, indem eine abfallende Regressionsgrade durch diese Wertepaare gelegt wird.

Der aktualisierte Wert der kritischen Fahrzeuggeschwindigkeit wird zur Ermittlung einer Grenzgeschwindigkeit vG herangezogen, die fortlaufend mit der aktuellen Fahrzeuggeschwindigkeit verglichen wird, um bei Erreichen der Grenzgeschwindigkeit ein Warnsignal zu erzeugen.

**Patentansprüche**

1. Verfahren zur Stabilitätskontrolle von Gespannen, bei dem die Fahrzeuggeschwindigkeit (v), der Lenkradwinkel ($\alpha$) und der Knickwinkel ($\phi$) zwischen der Längsachse (15) des Zugfahrzeugs (10) und der Längsachse (Anhängerdeichsel 16) des Anhängers (17) gemessen wird, bei dem aus den gemessenen Werten die Dämpfung (D) der Knickwinkelschwingung für eine bestimmte Fahrzeuggeschwindigkeit (v) ermittelt und zusammen mit der dazugehörigen Fahrzeuggeschwindigkeit (v) gespeichert wird und bei dem aus den gespeicherten Wertepaaren Dämpfung-, Fahrzeuggeschwindigkeit (D,v) die kritische Fahrzeuggeschwindigkeit ($v_{krit}$) berechnet wird, bei der die Dämpfung (D) der Knickwinkelschwingung Null ist,
   dadurch **gekennzeichnet,**
   daß der Quotient (Q) von Effektivwert des Knickwinkels ($\phi_{eff}$) zu Effektivwert des Lenkradwinkels ($\alpha_{eff}$) gebildet und mit einem vorbestimmten Grenzwert (G) verglichen wird, daß die von der Fahrzeuggeschwindigkeit (v) abhängige Dämpfung (D) der Knickwinkelschwingung nur dann bestimmt und zusammen mit der dazugehörigen Fahrzeuggeschwindigkeit (v) gespeichert wird, wenn der Quotient (Q) von Effektivwert des Knickwinkels ($\phi_{eff}$) zu Effektivwert des Lenkradwinkels ($\alpha_{eff}$) größer oder gleich dem Grenzwert (G) ist, und daß ein Warnsignal erzeugt wird, wenn die aktuelle Fahrzeuggeschwindigkeit (v) größer als eine Grenzgeschwindigkeit ($v_g$) ist, wobei die Grenzgeschwindigkeit ($v_g$) gleich der kritischen Fahrzeuggeschwindigkeit ($v_{krit}$) minus einer Geschwindigkeitsdifferenz ($\triangle v$) ist.

2. Verfahren nach Anspruch 1,
   dadurch **gekennzeichnet,**
   daß die Effektivwerte des Knickwinkels ($\phi_{eff}$) und des Lenkradwinkels ($\alpha_{eff}$) während eines Zeitintervalls ($\triangle t$) berechnet werden und daß aus den Effektivwerten von Knickwinkel ($\phi_{eff}$) und Lenkradwinkel ($\alpha_{eff}$) der entsprechende Quotient (Q) gebildet wird.

3. Verfahren nach Anspruch 2,
   dadurch **gekennzeichnet,**
   daß während des Zeitintervalls ($\triangle t$) die mittlere Fahrzeuggeschwindigkeit (v) bestimmt wird und daß die für ein Zeitintervall ($\triangle t$) ermittelte Dämpfung (D) der in diesem Zeitintervall ($\triangle t$) bestimmten mittleren Fahrzeuggeschwindigkeit (v) zugeordnet wird.

4. Verfahren nach Anspruch 2 oder 3,
   dadurch **gekennzeichnet,**
   daß die Dauer des Zeitintervalls ($\triangle t$) zwischen 5 s und 20 s, vorzugsweise zwischen 8 s und 15 s und insbesondere etwa bei 10 s liegt.

5. Verfahren nach einem der vorhergehenden Ansprüche,
   dadurch **gekennzeichnet,**
   daß der Grenzwert (G) in Abhängigkeit von der Geometrie von Zugfahrzeug und Anhänger vorgegeben wird.

6. Verfahren nach Anspruch 5,
   dadurch **gekennzeichnet,**
   daß der Grenzwert (G) gleich dem Quotienten aus einem vorgegebenen Knickwinkel ($\phi$) für Fahrzustände des Gespanns ohne Knickwinkeloszillation zu einem vorgegebenen Lenkradwinkel ($\alpha$) ist.

7. Verfahren nach Anspruch 6,
   dadurch **gekennzeichnet,**
   daß der minimale Absolutwert ($\phi_{min}$) von der gegebenen Geometrie des Gespanns abhängigen Knickwinkels ($\phi$) für Fahrzustände ohne Knickwinkeloszillation, der eine Funktion des Lenkwinkels ($\alpha_L$) ist, den vorgegebenen Knickwinkel ($\phi$) zur Bestimmung des Grenzwerts (G) bildet.

8. Verfahren nach Anspruch 6 oder 7,
   dadurch **gekennzeichnet,**
   daß der vorgegebene Lenkradwinkel ($\alpha$) zur Bestimmung des Grenzwertes (G) so gewählt wird, daß der zugehörige Lenkwinkel ($\alpha_L$) zwischen 10° und 20° beträgt.

9. Verfahren nach einem der vorhergehenden Ansprüche,
   dadurch **gekennzeichnet,**
   daß beim Speichern eines neuen Wertepaares Dämpfung-Fahrzeuggeschwindigkeit das älteste gespeicherte Wertepaar gelöscht wird, wenn bereits eine vorgegebene Anzahl (n) von Wertepaaren gespeichert ist.

10. Verfahren nach Anspruch 11,
    dadurch **gekennzeichnet,**
    daß die Geschwindigkeitsdifferenz ($\triangle v$) 8 % bis 15 %, vorzugsweise 10 % der aktuellen kritischen Fahrzeuggeschwindigkeit ($v_{krit}$) beträgt.

11. Verfahren nach einem der vorhergehenden Ansprüche,
    dadurch **gekennzeichnet,**
    daß die aktuelle Fahrzeuggeschwindigkeit (v) fortlaufend mit der aktuellen Grenzgeschwindigkeit ($v_g$) verglichen wird.

## Claims

1. Method for the stability control of a traction vehicle and trailer, in which is measured the vehicle speed (v), the steering wheel angle ($\alpha$) and the jack-knifing angle ($\phi$) between the longitudinal axis (15) of the traction vehicle (10) and the longitudinal axis (trailer drawbar 16) of the trailer (17), in which from the measured values is determined the damping (D) of the jack-knifing angle swing for a given vehicle speed (v) and stored together with the associated vehicle speed (v), and in which from the stored value pairs, damping and vehicle speed (D,v), is calculated the critical vehicle speed ($v_{crit}$) at which the damping (D) of the jack-knifing angle swing is zero, **characterised** in that there is produced a ratio (Q) of the rms of the jackknifing angle ($\phi_{eff}$) to the rms of the steering wheel angle ($\alpha_{eff}$) and compared with a predetermined limiting value (G), that the damping (D) of the jack-knifing angle speed, which is a function of the vehicle speed (v), is determined and stored together with the associated vehicle speed (v) only when the ratio (Q) of rms of the jack-knifing angle ($\phi_{eff}$) to the rms of the steering wheel angle ($\alpha_{eff}$) is bigger or equal to the limiting value (G), and that a warning signal is produced when the current vehicle speed (v) is bigger than a limiting speed ($v_g$), wherein the limiting speed ($v_g$) is equal to the critical vehicle speed ($v_{crit}$) minus a speed difference ($\triangle v$).

2. Method according to claim 1, **characterised** in that the rms of the jack-knifing angle ($\phi_{eff}$) and the steering wheel angle ($\alpha_{eff}$) are calculated during a time interval ($\triangle t$) and that from the rms of jack-knifing angle ($\phi_{eff}$) and steering wheel angle ($\alpha_{eff}$) is produced the corresponding ratio (Q).

3. Method according to claim 2, **characterised** in that the mean vehicle speed (v) is determined during the time interval ($\triangle t$) and that the damping (D) determined for a time interval ($\triangle t$) is allocated to the mean vehicle speed (v) determined during this time interval ($\triangle t$).

4. Method according to claim 2 or 3, **characterised** in that the duration of the time interval ($\triangle t$) is between 5 s and 20 s, preferably between 8 s and 15 s and especially approximately 10 s.

5. Method according to one of the preceding claims, **characterised** in that the limiting value (G) is given as a function of the geometry of the traction vehicle and the trailer.

6. Method according to claim 5, **characterised** in that the limiting value (G) is equal to the ratio of a given jackknifing angle ($\phi$) for the driving conditions of the vehicle and trailer without jack-knifing angle oscillations to a given steering wheel angle ($\alpha$).

7. Method according to claim 6, **characterised** in that the absolute minimum value ($\phi_{min}$) of the jack-knifing angle ($\phi$), given as a function of the geometry of the vehicle and trailer for the driving conditions without jack-knifing angle oscillations, which is a function of the steering angle ($\lambda_L$), forms the given jack-knifing angle ($\phi$) for determining the limiting value (G).

8. Method according to claim 6 or 7, **characterised** in that the given steering wheel angle ($\alpha$) for determining the limiting value (G) is chosen in such a way that the associated steering angle ($\alpha_L$) amounts to between 10° and 20°.

9. Method according to one of the preceding claims, **characterised** in that during the storing of a new value pair, damping-vehicle speed, the oldest stored pair of values is erased when a given number (n) of value pairs has already been stored.

10. Method according to claim 11, **characterised** in that the speed difference ($\triangle v$) is 8% to 15%, preferably 10% of the current critical vehicle speed ($v_{crit}$).

11. Method according to one of the preceding claims, **characterised** in that the current vehicle speed (v) is continuously compared with the current limiting speed ($v_g$).

## Revendications

1. Procédé de contrôle de la stabilité d'attelages, dans lequel on mesure la vitesse du véhicule (V), l'angle de rotation du volant ($\alpha$) et l'angle de pivotement ($\phi$) entre l'axe longitudinal (15) du tracteur (10) et l'axe longitudinal (timon 16) de la remorque (17), dans lequel on détermine à partir des valeurs mesurées l'amortissement (D) de l'oscillation de l'angle de pivotement pour une vitesse (V) donnée du véhicule et on la met en mémoire en même temps que la vitesse (V) correspondante du véhicule et dans lequel on calcule à partir des couples vitesse d'amortissement - vitesse du véhicule (D, V) la vitesse critique ($v_{krit}$) du véhicule pour laquelle l'amortissement (D) de l'oscillation de l'angle de pivotement est nul, procédé caractérisé par le fait que l'on forme le quotient (Q) de la valeur effective de l'angle de pivotement ($\phi_{eff}$) et de la valeur effective de l'angle de rotation du volant ($\alpha_{eff}$) et on le compare à une valeur seuil (G) prédéterminée, par le fait que l'on détermine l'amortissement (D) de l'oscillation de l'angle de pivotement dépendant de la vitesse du véhicule et on le mémorise avec la vitesse du véhicule (V) correspondante uniquement lorsque le quotient (Q) de la valeur effective de l'angle de pivotement ($\phi_{eff}$) et de la valeur effective de l'angle de rotation du volant ($\alpha_{eff}$) est supérieur ou égal à la valeur seuil (G) et par le fait qu'un signal d'avertissement est généré lorsque la vitesse instantanée (V) du véhicule est supérieure à une vitesse limite ($V_g$), la vitesse limite ($V_g$) étant égale à la vitesse critique ($V_{krit}$) du véhicule moins une différence de vitesse ($\triangle V$).

2. Procédé selon la revendication 1, caractérisé par le fait que l'on calcule les valeurs effectives de l'angle de pivotement ($\phi_{eff}$) et de l'angle de rotation du volant ($\alpha_{eff}$) pendant un intervalle de temps ($\triangle t$) et par le fait que l'on forme, à partir des valeurs effectives de l'angle de pivotement ($\phi_{eff}$) et de l'angle de rotation du volant ($\alpha_{eff}$), le quotient (Q) correspondant.

3. Procédé selon la revendication 2, caractérisé par le fait que l'on détermine la vitesse moyenne (V) du véhicule pendant l'intervalle de temps ($\triangle t$) et par le fait que l'on associe l'amortissement (D) déterminé pour un intervalle de temps ($\triangle t$) à la vitesse moyenne (V) du véhicule déterminée dans cet intervalle de temps ($\triangle t$).

4. Procédé selon la revendication 2 ou 3, caractérisé par le fait que la durée de l'intervalle de temps ($\triangle t$) est comprise entre 5 s et 20 s, de préférence entre 8 s et 15 s et, plus particulièrement, est de 10 s.

5. Procédé selon l'une des revendications précédentes, caractérisé par le fait que l'on prédétermine la valeur seuil (G) en fonction de la géométrie du tracteur et de la remorque.

6. Procédé selon la revendication 5, caractérisé par le fait que la valeur seuil (G) est égale au quotient d'un angle de pivotement ($\phi$) prédéterminé pour des situations de déplacement de l'attelage sans oscillation de l'angle de pivotement et d'un angle de rotation du volant ($\alpha$) prédéterminé.

7. Procédé selon la revendication 6, caractérisé par le fait que la valeur absolue minimale ($\phi_{min}$) de l'angle de pivotement ($\phi$), qui dépend de la géométrie de l'attelage pour des conditions de déplacement sans oscillation de l'angle de pivotement et est une fonction de l'angle de braquage ($\alpha_L$), constitue l'angle de pivotement ($\phi$) servant à la détermination de la valeur seuil (G).

8. Procédé selon la revendication 6 ou 7, caractérisé par le fait que, pour la détermination de la valeur seuil (G), on choisit l'angle de rotation du volant ($\alpha$) prédéterminé tel, que l'angle de braquage ($\alpha_L$) correspondant soit compris entre 10° et 20°.

9. Procédé selon l'une des revendications précédentes, caractérisé par le fait que, lors de la mémorisation d'un nouveau couple de valeurs amortissement - vitesse du véhicule, on efface le couple mémorisé le plus ancien dès qu'un nombre (n) prédéterminé de couples de valeurs a déjà été mémorisé.

10. Procédé selon la revendication 9, caractérisé par le fait que la différence de vitesses ($\triangle V$) est de 8% à 15%, de 10% de la vitesse critique ($V_{krit}$) instantanée du véhicule.

11. Procédé selon l'une des revendications précédentes, caractérisé par le fait que l'on compare en continu la vitesse instantanée du véhicule (V) à la vitesse limite ($V_g$) instantanée.

# FIG.1

# FIG.2

$$\bar{v} = \frac{1}{\Delta t} \int_{t_1}^{t_2} \sim dt$$
$$\Delta t = t_2 - t_1$$

$$\varphi_{eff} = \sqrt{\frac{1}{\Delta t} \int_{t_1}^{t_2} \varphi^2 dt}$$
$$\Delta t = t_2 - t_1$$

$$\alpha_{eff} = \sqrt{\frac{1}{\Delta t} \int_{t_1}^{t_2} \alpha^2 dt}$$
$$\Delta t = t_2 - t_1$$

$$Q = \frac{\varphi_{eff}}{\alpha_{eff}}$$

$$Q \geq G?$$

G

A,a,L,i

D

D(v)1
D(v)2
D(v)3
⋮
D(v)n

$v_{krit}$

$$v > v_{krit} - 10\% \ ?$$

EP 0 358 973 B1

# FIG.3

$$Q = \frac{\varphi_{eff}}{\alpha_{eff}}$$

x : ohne Anregung

● : mit Anregung

K

G

v (km/h)

EP 0 358 973 B1